(19) Europäisches Patentamt
European Patent Office
Office européen des brevets

(11) **EP 4 115 413 B1**

(12) **EUROPEAN PATENT SPECIFICATION**

(45) Date of publication and mention
of the grant of the patent:
**18.02.2026 Bulletin 2026/08**

(21) Application number: **22725576.7**

(22) Date of filing: **11.05.2022**

(51) International Patent Classification (IPC):
***G10L 21/0208*** (2013.01)

(52) Cooperative Patent Classification (CPC):
**G10L 21/0208; H04R 1/1083;** H04R 25/507;
H04R 25/554; H04R 2225/43; H04R 2420/07;
H04R 2430/01; H04R 2460/01

(86) International application number:
**PCT/SE2022/050461**

(87) International publication number:
**WO 2022/240346 (17.11.2022 Gazette 2022/46)**

(54) **VOICE OPTIMIZATION IN NOISY ENVIRONMENTS**

SPRACHOPTIMIERUNG IN UMGEBUNGEN MIT HOHEM GERÄUSCHPEGEL

OPTIMISATION DE LA VOIX DANS DES ENVIRONNEMENTS BRUYANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2021 SE 2150611**

(43) Date of publication of application:
**11.01.2023 Bulletin 2023/02**

(73) Proprietor: **Audiodo AB (publ)**
**211 13 Malmö (SE)**

(72) Inventors:
• **PHILIPSSON, John**
**247 35 Södra Sandby (SE)**
• **LUNDBÄCK, Jonas**
**235 35 Vellinge (SE)**

(74) Representative: **Ström & Gulliksson AB**
**P.O. Box 793**
**220 07 Lund (SE)**

(56) References cited:
**US-A1- 2011 038 496      US-B1- 8 964 998**

• **KOUNOVSKY TOMAS ET AL: "Single channel
speech enhancement using convolutional neural
network", 2017 IEEE INTERNATIONAL
WORKSHOP OF ELECTRONICS, CONTROL,
MEASUREMENT, SIGNALS AND THEIR
APPLICATION TO MECHATRONICS (ECMSM),
IEEE, 24 May 2017 (2017-05-24), pages 1 - 5,
XP033105854, DOI: 10.1109/
ECMSM.2017.7945915**

## Description

### TECHNICAL FIELD

The present invention relates to voice optimization of audio and more precisely to a method and a device for providing voice optimization in noisy environments.

### BACKGROUND

Portable electronic equipment is used by virtually everybody, everywhere. For instance, a mobile phone is carried at all times and can be used to make calls or listen to audio. The audio listened to may be music, but podcasts and audiobooks are becoming increasingly common. With the increased use and portability of electronic devices for communication and entertainment, the risk that the audio is consumed in a noisy environment is increased. With music, a noisy environment may be nothing more than a nuisance, but when it comes to listening to speech audio, the noisy environment may make the speech unintelligible over the noise.

Speech intelligibility of speech audio will depend on the signal to noise ratio, in this case, the ratio between the speech audio and the noise. Historically, speech intelligibility is improved by modifying the signal to noise ratio. The brute force approach is to amplify the voice signal such that it is intelligible over the noise, needless to say, this approach may cause damage to the hearing of the person listening to the speech audio. Another approach is, if headphones are used, to decrease the noise by forming the headphones to attenuate outside noise or to utilizing active noise cancellation. The noise attenuation will depend on acoustic design and the fitting of the headphones on the user. The active noise cancellation requires significant processing power with increased material cost and energy consumption as a result.

From the above, it is understood that there is room for improvements.

### SUMMARY

An object of the present invention is to provide a new type of voice optimization which is improved over prior art and which eliminates or at least mitigates the drawbacks discussed above. More specifically, an object of the invention is to provide a method and headphones that improves the intelligibility of speech or voiced audio in noisy environments. These objects are achieved by the technique set forth in the appended independent claims with preferred embodiments defined in the dependent claims related thereto.

In a first aspect, a method of increasing speech intelligibility of an audio stream comprising speech audio is presented. The method is performed in real-time by headphones and comprises detecting an ambient noise, estimating an internal noise based on the ambient noise, and determining a voice filter based on the estimated internal noise and the audio stream. The estimated internal noise is an estimation of noise as perceived at an eardrum of a user of the headphones. The determined voice filter is based on psychoacoustic masking, and a frequency gain of the voice filter is calculated such that the internal noise is masked by a target audio stream that will result from applying the voice filter to the audio stream. The method further comprises applying the voice filter to the audio stream to provide the target audio stream, and outputting the target audio stream to one or more transducers thereby generating an internal sound directed to an ear cavity of the user of the headphones. In addition to this, the method comprises detecting the internal sound of the headphones, by one or more internal microphones arranged to detect the internal sound at the ear cavity of the user of the headphones. The step of determining the voice filter is further based on the detected internal sound and comprises subtracting the estimated internal noise from the detected internal sound to provide a true audio stream. The method further comprises updating the voice filter based on a difference between the target audio stream and the true audio stream.

The step of estimating internal noise is implemented by one or more Recurring Neural Networks, RNN. The use of RNN is beneficial as it allows an accurate and efficient way of estimating the internal noise.

In one variant, the step of determining the voice filter further comprises comparing the estimated internal noise to one or more masking thresholds, and updating the voice filter based the comparing. This is beneficial as it provides for an energy and computational efficient way of determining if the audio is masked by the noise or not.

Preferably, said one or more masking thresholds are calculated by performing a critical band analysis of the audio stream. The critical band analysis comprises auditory masking by frequency spreading. This is beneficial as it increases the accuracy of the masking thresholds.

In one variant, the method further comprises filtering the audio-stream to compensate for a hearing profile associated with a user of the headphones. This is beneficial as the speech intelligibility is further increased and optimized for the user.

Preferably, the step of determining the voice filter is done after the filtering, such that the determining is based on an audio stream compensated for a hearing profile associated with a user of the headphones. This is beneficial as the same voice filer algorithm may be used regardless of user and the computational effort may be reduces as some compensation is already applied through the hearing profile.

In one variant, the step of determining the voice filter further comprises determining a playback phon based on a playback volume, and the step of updating the voice filter is further based on an equal loudness contour associated with the determined phon. This is beneficial as the speech intelligibility will change over volume, but not evenly across all frequencies and compensating for this increase speech intelligibility regardless of playback volume.

Preferably, the step of determining the playback phon is further based on the internal sound. This is beneficial as it gives an accurate reading of the actual sound pressure level experienced by the user.

In one variant, the step of determining the voice filter further comprises smoothing a gain of the voice filter in frequency by convolution using a frequency window function. This is beneficial as it removes unwanted differences between adjacent groups of frequencies.

In one variant, the step of determining the voice filter further comprises averaging the gain of the voice filter using an exponentially weighted moving average comprising one or more weighting parameters. This is beneficial as it removes unwanted differences between adjacent groups of frequencies.

In one variant, the step of determining the voice filter further comprises applying configurable mixing setting to select the degree at which the voice filter is to be applied to the audio stream. This is beneficial as it makes the amount of improvement customizable and the user may select the desired amount of compensation.

In one variant, the ambient noise is detected by an external microphone operatively connected to the headphones. This is beneficial as it provides an accurate measure of the ambient noise.

Alternatively or additionally, the ambient noise is limited to a maximum audio bandwidth of up to 10 kHz, preferably up to 8 kHz. This is beneficial as it further decreases the computational complexity of the present method.

In one variant, the method further comprises applying Active Noise Cancellation, ANC, to the audio stream after applying the voice filter to the audio stream. This is beneficial as the noise of the internal sound is further reduced.

In a second aspect, headphones are presented. The headphones comprise one or more transducers, at least one internal microphone arranged to detect an internal sound at an ear cavity of a user, and a processing module operatively connected to the internal microphone, to said one or more transducers and to an external microphone. The processing module is configured to perform the method the present invention.

In one variant, the external microphone is comprised in the headphones. This is beneficial as the data from the microphone is readily available to the processing module.

In a third aspect, and audio system for increasing speech intelligibility in real-time is presented. The system comprising a portable electronic device operatively connected to headphones and configured to transfer an audio stream comprising speech audio to the headphones, wherein the headphones are the headphones according to the present invention.

In one variant, an ambient noise is sensed by an external microphone comprised in the electronic device, and the electronic device is further configured to transfer the ambient noise sensed by the external microphone to the headphones. This is beneficial as additional noise data may be provided by the external microphone of the headphones. Alternatively or additionally, the headphones may be configured without an external microphone, thus decreasing cost of the headphones.

In a fourth aspect, a computer program product is presented. The computer program product is configured to, when executed by a processing module, causes the processing module to perform the method of the present invention.

## BRIEF DESCRIPTION OF THE DRAWINGS

Embodiments of the invention will be described in the following; references being made to the appended diagrammatical drawings which illustrate non-limiting examples of how the inventive concept can be reduced into practice.

Figs. 1a-b are schematic views of an audio system according to embodiments of the invention.
Fig. 2 is a schematic view of a voice filter and its signals according to embodiments of the present invention.
Fig. 3 is a block view of a method of increasing speech intelligibility of an audio stream according to embodiments of the present invention.
Fig. 4 is an exemplary plot of speech optimization according to embodiments of the present invention.
Fig. 5 is an exemplary plot of equal loudness contours according to embodiments of the present invention.
Fig. 6 is an exemplary plot of speech optimization according to embodiments of the present invention.
Fig. 7 is a block view of determining of voice a voice filter according to embodiments of the present invention.
Fig. 8 is a computer program product according to embodiments of the present invention.

## DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Two or more items that are "coupled" may be integral with each other. The terms "a" and "an" are defined as one or more unless this disclosure explicitly requires otherwise. The terms "substantially," "approximately," and "about" are defined as largely, but not necessarily wholly what is specified, as understood by a person of ordinary skill in the art. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a method that "comprises," "has," "includes" or "contains" one or more steps possesses those one or more steps, but is not limited to possessing only those one or more steps.

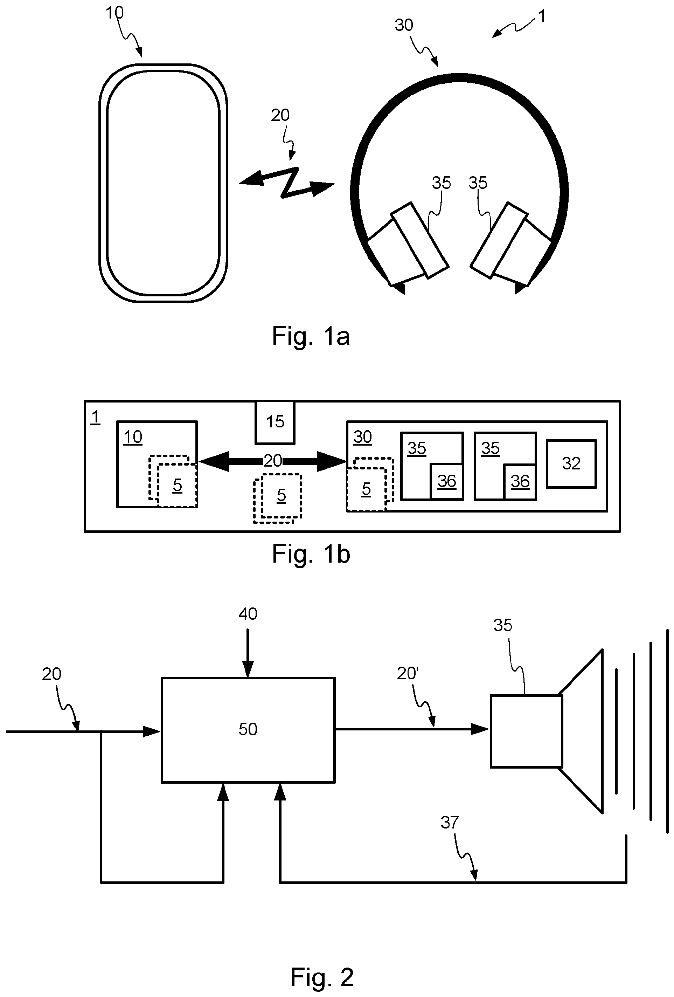

Fig. 1a is a simplified view of a real-time audio system 1 for improving speech intelligibility of an audio source signal 20 in the form of an audio stream 20. The corresponding audio system 1 is also depicted in a schematic view in Fig. 1b to give an alternative illustration of component and feature location. The audio stream 20 comprises speech audio and may be any suitable form of streamed audio. The speech audio may be any speech audio in digital form, such as podcast, audio books, voice communication etc. The audio stream 20 is typically transferred from an electronic device 10 to an audio device 30. The transferring is preferably wireless via a suitable wireless interface such as BLE etc., but may also be wired. The electronic device 10 may be any suitable electronic device 10 but is preferably portable electronic device 10 such as a mobile terminal 10. The audio device 30 is a pair of headphones 30 and may be of any suitable design e.g. supra-aural, circum-aural or in-ear, but, as readily understood by the skilled person, any audio device 30 workable with the presented invention is suitable. The audio device 30 is adapted to receive the audio stream 20 from the mobile terminal 10, which means that if the audio stream 20 is transferred via BLE, the audio device comprises one or more BLE chipset. Further to this, the audio device 30 comprises one or more transducers 35, preferably two transducers 35, and necessary hardware and software modules to transform the received audio stream 20 to analogue signals possible to be outputted by the one or more transducers 35. The audio stream 20 is associated with a playback volume 15, set by any device 10, 30 of the audio system 1 indicating a level at which the audio stream 20 is to played at. The hardware of the audio device 30 comprises at least one processing module 32. The processing module 32 may comprise a suitable MCU, or plurality of MCUs, one or more DSPs, one or more memories, and may further comprise the required hardware for communication across the interface, e.g. a BLE transceiver.

The transducer(s) 35 of the audio device 30 are configured to generate sound directed to an ear cavity of a user of the audio device 30. The audio device 30 is provided with one or more internal microphones 36 arranged to measure the sound generated by the transducers 35. The sound is measured at the ear cavity of the user when the audio device 30 is used by the user. Preferably, one internal microphone 36 is provided to measure the sound generated by each of the transducers 35.

The audio system 1 is further provided with one or more external microphones 5. The external microphone 5 is external to the audio device 30 and may be any suitable microphone 5 operatively connected to the processing module 32 of the audio device 30. The external microphone 5 may be comprised in the audio device 20 when, e.g. the audio device 30 is a headset, the external microphone may be arranged to detect a voice of the user of the audio device 30. Alternatively, or additionally, the external microphone 5 may be comprised in the portable electronic device 10 when, e.g. the portable electronic device 10 is a mobile terminal 10.

Turning now to Fig. 2, a conceptual summary of the present invention will be given. The invention is implemented on an audio device 30 as presented herein. The speech intelligibility of the audio stream 20 is increased by means of a voice filter 50. This voice filter 50 applied to the audio stream 20 creating a target audio stream 20' that is output to the one or more transducers 35. The target audio stream 20' is, compared to the audio stream 20, filtered to increase the speech intelligibility. Further details regarding the inner workings of the audio filter 50 will be given throughout this disclosure. The voice filter 50 is determined based at least on the ambient noise 40 and an internal sound 37. The ambient noise 40 may be detected by the one or more external microphones 5 operatively connected to the processing module 32 of the audio device 30. The internal sound 37 is, or is an estimate of, the sound at the ear cavity of the user of the audio device 30. The internal sound 37 is measure by the internal microphone 36 associated with the one or more transducers 35. Preferably, the audio device 30 comprises at least one voice filter 50 associated with each of the transducers 35 of the audio device 30.

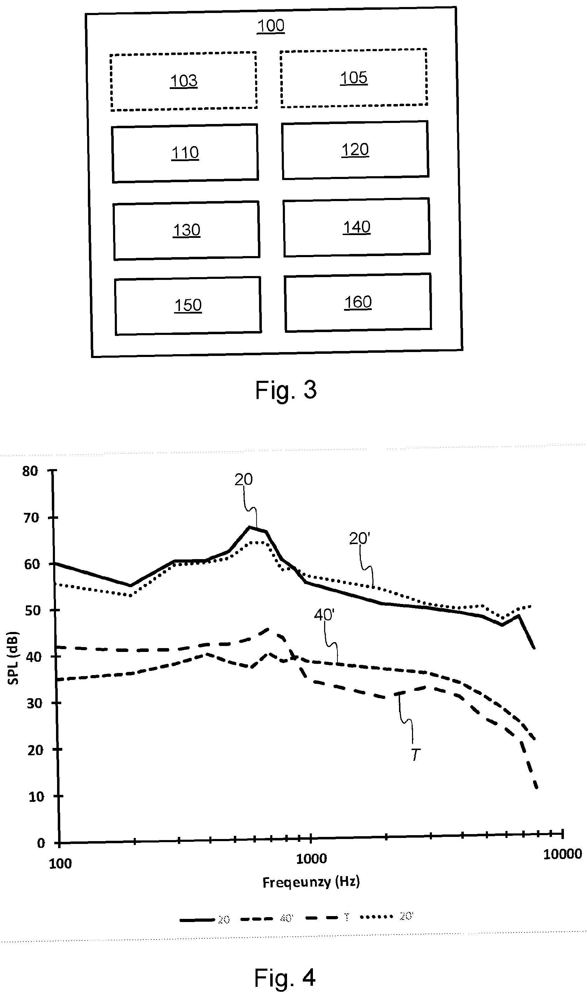

With reference to Fig. 3, an overview of a method 100 of increasing speech intelligibility of the audio stream 20 comprising speech audio will be described. It should be mentioned that the method 100 may be described as increasing speech intelligibility by processing of an audio stream 20 comprising speech audio. The method 100 is performed by the audio device 30 as presented herein. Each of the steps of the method 100 will be described in further detail elsewhere in this disclosure. The method 100 comprises outputting 150 the target audio stream 20' to the user of the audio device 30. That is to say, the audio filter 50 is applied 140 to the audio stream 20 to provide the target audio stream 20' that is provided to the transducer 35 in order to generate the internal sound 37. The internal sound 37 is detected 160, typically by the internal microphone 36 is detecting 110 the ambient noise 40. This is typically performed by one or more the external microphones 5 measuring the ambient noise and providing this to the processing module 32 of the audio device 30. The ambient noise 40 is used to estimate 120 an internal noise 40', the internal noise 40' is noise as perceived by the user's ear drum. The audio stream 20, the estimated internal noise 40' and the detected internal sound 37 are used to determine the speech filter 50.

In some embodiments of the method 100, it further comprises filtering 105 the audio stream 20 to compensate for a hearing profile $HL(f_k)$ of a user of the system 1. This is beneficial since hearing disabilities and/or impairments of the user are compensated for in addition to the speech intelligibility of the method. Preferably the hearing profile $HL(f_k)$ compensation is applied to the audio source signal 20 prior to applying or determining 130 the voice filter 50, such that the voice filter 50 is determined based on an audio stream 20 compensated for hearing disabilities and/or impairments of the user. This is beneficial since it effectively removes differences between users and the same methodology for determining 130 the voice filter 50 may be used for all users. Additionally, since the compensation with respect to the hearing capabilities only affects the audio stream 20, it will, in most cases, directly improve the speech intelligibility. Further to this, the hearing profile compensation can be accounted for in the determination of the voice filter 50 and no pre-processing is required until the voice filter 50 is applied 140. The relation between the hearing profile $HL(f_k)$ and the ambient noise 40 may be important, as the processing result to increase speech intelligibility may, for some users, have reduced effect with respect to the hearing capabilities of the user if the users hearing profile $HL(f_k)$ is not considered.

It should be mentioned that in audio systems 1 or audio devices 30 utilizing noise cancellation techniques, such as active noise cancellation, ANC, the noise cancellation is preferably applied to the audio stream 20 after the voice filter 50. This is beneficial since doing noise cancellation decreases the noise level, but at the same, may cause the audio signal to become distorted. The degree of distortion depends on the configuration of the noise cancellation and the tuning and/or calibration of the noise cancellation technique.

The target audio stream 20' may become distorted or otherwise negatively impacted by e.g. digital to analogue converter, the transducer operation and the position of the audio device 30 on the user. Consequently, it is beneficial to detect the internal sound 37 presented at the eardrum of the user after removal of noise by the noise cancellation, compare true audio stream 37', i.e. the internal sound 37 after removal of internal noise 40', to the target audio stream 20' and act to minimize the differences.

As already indicated, the audio system 1 is an audio system 1 with real-time constraints. The audio stream 20 is received as digital samples either per sample basis or per frame basis. The collection of samples in frames can be done elsewhere or as a part of the system 1, e.g. by the electronic device 10. The audio stream 20 comprise a collection of $N$ samples with sample rate $F_s$ samples per second, these are formed into an audio signal frame with frame (time) index $l$. The audio stream 20 can be mono or stereo.

The voice filter 50 is based on psychoacoustic masking and comprise a psychoacoustic model derived from a speech intelligibility index or equivalent e.g. Articulation Index, Speech Transmission Index or Short Term Objective Intelligibility, and theory of tonal masking of noise. A frequency gain of the voice filter 50 is calculated such that the internal noise 40' is masked by the target audio stream 20', this will be explained in more detailed in other sections of this disclosure.

The estimated internal noise 40' may be provided in a number of different ways and the input to the estimation 120 of the internal noise 40' is at least the ambient noise 40 detected 110 by one of the external microphones 5. The ambient noise 40 is provided as a microphone signal by the external microphone and is preferably represented in a frame-wise construction substantially equal to that of the audio stream 20. The microphone signal may also be a stereo signal, such a signal is typically termed dual microphone signal. A dual microphone signal comprises two independent microphone signals formatted as a single stereo signal. As previously explained, there may be several external microphones 5 in the system 1, and the step of estimating 120 the internal noise 40' may comprise determining to use e.g. only one microphone signal of all microphone signals provided by the external microphones 5. A decision pertaining to which external microphone to use may be based on e.g. a highest signal level, proximity to the transducer etc. All external microphones 5 may be processed separately in order to obtain ambient noise 40 from each of the processed external microphones 5. The external microphones 5 may be processed to obtain a stereo signal, and even processed to obtain a direction of the ambient noise 40 such that each transducer 35 may be associated with a different ambient noise 40.

As the skilled person will understand after digesting the teachings herein, there may, based on resource management and optimization of available processing power in the real-time audio system 1, be a trade-off necessary whether to utilize several external microphones 5 or not for detecting 110 the ambient noise 40. This trade-off may be application dependent. When the audio device 30 is e.g. a pair of headphones 30, and if enough processing capabilities exist, two separate estimations 120 of the internal noise 40' are feasible, one for a left ear of a user and one for a right ear of the user. However, if e.g. processing capabilities are insufficient or if stringent requirements on current consumption exist, a rational assumption may be the ambient noise 40 is substantially equal in for the left and the right ear and the same internal noise 40' may be utilized for both ears.

The external microphones 5 may be sampled with a different sample rate compared to the audio signal. Given that the important frequency range for voice communication is up to 8 kHz, the external microphones 5 be bandlimited to a maximum bandwidth of 10 kHz, or preferably 8 kHz. The lower bandwidth reduces processing load, memory load and current consumption. The maximum bandwidth may be reduced even further to reduce the processing load, the memory load and the current consumption additionally, but the maximum bandwidth has to be traded-off for requirements of the ambient noise 40.

It should be noted, as the skilled person will appreciate after reading this disclosure, that the external microphones 5 will produce a signal comprising both the ambient noise 40 and additional sound sources. Only the ambient noise 40 is relevant which means that e.g. echo originating from the transducer and near-end talk from listener engaging in a conversation is beneficial to exclude from the signal produced by the external microphones 5. This is beneficial since it reduces the risk that that the additional sound sources are miss-classified as ambient noise 40.

One solution to avoid miss-classifying the additional sound as ambient noise is to use one or more noise estimation techniques e.g. higher degree statistics, Cepstrum analysis, Auto-regressive modelling or non-parametric methods as Welch spectrum and Minimum variance method. Typically, for minimum effort implementations, the method 100 may stop the detection 110 of ambient noise 40 and/or the estimating 120 of the internal noise 40' if additional sound sources are detected by the external microphone(s) 5. The distinction between background noise and voice sources may be solved using e.g. a voice activity detector, VAD.

The internal noise 40' is estimated 120 by a Recurring Neural Network, RNN. This will be explained in more detail in other sections of the disclosure, but one benefit is that the complexity of implementation and configuration of e.g. estimating 120 the internal noise 120, detection of additional sounds, voice detection etc. are exchanged into training and operating the RNN, which is well described in the theory of machine learning.

Regardless of how the internal noise 40' is estimated 120, a representation of the internal noise 40' comprise an average energy values $E_v(b)$, $b = 1... N_B$ of the internal noise 40' only for each auditory filter band, or critical band $b$. The concept of critical bands $b$ is explained in the following sections.

As previously explained, the frequency gain of the voice filter 50 is calculated such that the internal noise 40' is masked by the target audio stream 20'. In order to accomplish this, the audio stream 20 is filtered represented either in frequency or as a critical band $b$ representation. This may be accomplished by having the audio stream 20 divided into sub-frames, allowing for up to e.g. 50% overlap with a previous sub-frame. The sub-frames may be windowed using a suitable window function e.g. Hamming, Hanning, Triangular windows etc. A power spectrum $P_x(k) = |X(k)|^2$ is calculated using the sub-framed time domain data and a fast Fourier transform implementation, FFT, where $k$ is a frequency-bin index. The resolution of the frequency transform is preferably selected based on the sample rate $F_s$ and a sub-frame size. Typically, a trade-off between resolution and resource demand is required.

The quantities described in the frequency domain are all represented in sound pressure level, SPL, such that $P_x(k)/N$ is the power spectral density in SPL per frequency-bin index $k$ and referenced to a free-field reference point located at the listeners ear cavity. The conversion from digital signals to sound pressure level is done by an appropriate frequency dependent scaling, one scaling frequency function per microphone 5, 36 and one scaling frequency function per transducer 35. The scaling functions are predetermined and/or configurable and preferably stored in a memory operatively coupled to the processing module 32. The scaling functions can be considered as a calibration step conducted once during the design or configuration of the audio device 30. Typically, but not limited to, a scaling function for a microphone 5, 36 consist of one scale value per frequency-bin index $k$ and can be estimated from a microphone frequency response. A scaling frequency function for a transducer 35 would correspond to a transducer frequency response including scaling due to e.g. the distance to a reference point, typically the ear of the listener. As way of exemplifying, for a pair of headphones 30, the scaling frequency function for the audio stream 20 would be based on a frequency response of the transducer 35 referenced to an ear-reference-point, ERP.

A cochlear model divides the audio stream 20 into $N_B$ frequency bands, each frequency band representing one critical band $b$. The number of critical bands $N_B$ can be set according to desired resolution in the frequency domain making it possible to directly control the granularity at which the audio stream 20 can be adjusted by the voice filter 50. As the skilled person will understand, there is a trade-off between frequency resolution and resource demand, increasing the resolution require a larger cochlear model and therefore both a higher computational effort and a more complex implementation. The inventors behind this disclosure has found that that 20 frequency bands, $N_B = 20$, is a reasonable choice regarding frequency resolution and computational complexity. Without loss of generality, the division into critical bands $b$ may be made using an equivalent rectangular bandwidth, ERB, scale and a gamma-tone filter bank. Other scales and filter types may be utilized to correctly provide the cochlear model. For a general signal, for each critical band $b$, an averaged energy $e_x(b) = 1/N \sum_k P_x(k)|F_b(k)|^2$ is calculated using the power spectrum and where $F_b(k)$ is the frequency response of the filter associated with the critical band b in the gamma-tone filter bank. The energy in each band is represented as a vector by $\bar{e}_x = [e_x(1), ... , e_x(N_B)]^T$.

In the following, the psychoacoustic property of masking will be explained in some further detail and in particular how a first signal can mask a second signal, resulting in the second signal not being perceived. For explanatory purposes, assume that the audio stream 20 is approximated by a tonal signal while the ambient noise 40 is a wideband noise, the theory of tone masking noise applies.

A masking threshold $T(b)$ associated with the critical band $b$ is calculated based on the critical band analysis of the audio stream 20 which may comprise masking in frequency, simultaneous frequency masking by spreading, and temporal masking by gain smoothing.

The critical band analysis is applied in order to obtain a critical band representation $\bar{e}_s$ of the audio stream 20 as $\bar{e}_s$ = $[e_s(1), ... , e_s(N_B)]$. Note that this means that the masking threshold $T(b)$ as described above, will, in embodiments where compensation 105 according to a hearing profile $HL(f_k)$ is firstly applied, take hearing impairments of the user into account.

The simultaneous frequency masking by spreading mentioned above may be described by spreading function $SF$ that models frequency spreading. The spreading function $SF$ may be given by:

$$SF_{dB}(x) = 15.81 + 7.5(x + 0.474) - 17.5\sqrt{1 + (x + 0.474)^2}$$ dB, where $x$ has unit of Barks[1] and

-$SF_{dB}(x)$ is described in dB. It should be noted that frequency spreading is a convolution in the critical band domain and may be represented by a convolutional kernel matrix $\bar{\bar{S}}$. The masking threshold $T(b)$ per critical band $b$ for tone-masking-noise is then given as a masking threshold vector $\bar{T} = \bar{\bar{\gamma}}\bar{\bar{S}}\bar{e}_s$ , where - $\bar{T}$ = $[T(1), ... , T(N_B)]^T,$

$$\bar{\gamma} = diag[\gamma(1), ... , \gamma(N_B)]$$ and -$\gamma(x)$ = $1/(10^{(X_L+x)/10})$ and $x$ equals the Bark number. Both $SF_{dB}(x)$ and $\gamma(x)$ may be translated from Bark to the critical band domain as is used herein. $X_L$ is a configuration parameter that state the constant difference (in dB) between the masking threshold $\bar{T}$ and the noise energy, i.e. internal noise 40', per critical band $\bar{e}_v$ = $[e_v(1), ... , e_v(N_B)]$. A typical value of this configuration parameter is $X_L$ = 14.5. A higher value result in higher sensitivity to noise energy and therefore require a higher audio stream 20 energy to mask the ambient noise 40.

[1] *The Bark scale is a psychoacoustical scale.*

The audio system 1 is preferably configured to compute at least one masking threshold $T$ to be used in the voice optimization, i.e. in improving speech intelligibility. Depending on the application, e.g. headphones 30 etc. there can be two or more masking thresholds $\bar{T}$ calculated by the audio system 1. Each masking threshold $\bar{T}$ is typically related to one or more transducers 35.

Based on the masking threshold $\bar{T}$, the critical band representation $\bar{e}_s$ of the audio stream 20, which may comprise the hearing impairment compensation, and the noise critical band representation $\bar{e}_v$, the voice optimization will calculate a frequency dependent gain in the form of the voice filter 50 to improve speech intelligibility for the listener.

Voice optimization in this context refers to the process of calculating a frequency dependent gain, represented by a vector $\bar{g}_{opt}$, that is applied to the audio stream which is then considered voice optimized in the form of the target audio stream 20'. For each critical band $b$, the noise energy $e_v(b)$, i.e. internal noise 40', associated with each critical band $b$ is compared with the masking threshold $T(b)$ associated with each critical band $b$. If the noise energy is below the masking threshold $T(b)$, the audio stream 20 is determined to have masked the noise and no amplification of the audio stream 20 is necessary at the corresponding critical band $b$. That is to say, for this critical band $b$, the gain of the voice filter 50 is determined 130 to be unity or lower, but preferably at least as large as is necessary to fulfil the noise energy being below the masking threshold $T(b)$. If the noise energy exceeds the masking threshold $T(b)$, the noise is not masked, and an amplification of the audio source signal is needed. That is to say, for this critical band $b$, the gain of the voice filter 50 is determined 130 to be greater than unity. The amplification can be represented in many ways, and the skilled person will, after digesting this disclosure, have no problem in industrializing any of the teachings herein.

The amplification of the audio stream 20 in each critical band $b$ by $\sqrt{g_{opt}(b)}$ result in a voice optimized signal, i.e. the target audio stream 20'.

Note that the disclosure described herein performs simultaneous masking in frequency that is included in the model (matrix $\bar{\bar{S}}$). When calculating the optimal gain $g_{opt}(b)$ it may be preferable to state a general formulation including all frequency bands rather than calculating the gain individually for each frequency band. A formulation of optimal gain $\bar{g}$ as per this invention includes all frequency bands and the simultaneous masking in frequency. Consequently, the present invention will result in an optimized usage of the available gain parameters compared to when each gain is calculated individually and not including simultaneous masking in the model.

As previously stated, the audio stream 20, $\bar{e}_s$, is used to calculate the masking threshold $T(b)$ to which the estimated internal noise 40' is compared and deemed masked or not. The presentation of the voice optimized signal 20', the target audio stream 20', at the user's ear cavity via the transducer 35 may be impacted by several frequency dependent components, among which perhaps the most important is the position and fit of the headphones 30, resulting in that the presented version of the target audio stream 20' does not have the expected frequency content. The perceived optimized voice signal $\bar{e}_{\hat{s}}$ is part of the microphone signal 37 along with the estimated internal ambient noise 40'.

Opposed to ANC or noise reduction techniques where the noise is measured by a combination of the external microphone 5 and the internal microphone 36, in the present invention, the internal noise 40', $\overline{e}_v$, is estimated based on the external noise 40. Hence, the presented voice optimized signal $\overline{e}_{\hat{s}}$ can be estimated by, but not limited to, e.g. subtracting $\overline{e}_v$ from the internal sound 37. One further benefit of this is that it enables real-time adjustment to the voice optimization processing such that $\overline{e}_{\hat{s}}$ will converge towards $\overline{e}_s$ in some pre-defined measure, e.g. root-mean.-square, and that can then account for e.g., changing position or degree of fitting of the headphones 30 and make the method 100 more robust and resilient.

In one non-limiting example, the amplification may be such that a gain is calculated which, when applied to the audio stream 20, would correspond to a resulting masking threshold $\overline{T}$. Assume that when the noise energy is equal to or less than the masking threshold $\overline{T}$, no amplification is needed, and amplification is needed for the frequency bands where the noise energy exceeds the threshold. Note that the opposite may very well be true and that a negative gain, i.e. an attenuation may be possible in both cases. The resulting optimal voice filter 50 will only comprise the necessary amplifications , and in some cases redistribute energy from non-masked frequencies to masked frequencies applied. The desired goal function $T_d(b)$ per frequency band $b$ may be defined as:

$$T_d(b) = \begin{cases} T(b), \text{if } e_v(b) \le T(b) \\ e_v(b) \text{ if } e_v(b) > T(b) \end{cases}$$

Using the desired goal function $\overline{T}_d = [T_d(1), \dots , T_d(N_B)]$, a weighted least square norm optimization problem may be formulated which may be solved for $\overline{g}_{opt}$ using the method of Lagrange multipliers and Karush-Kuhn-Tucker conditions[2]

which implies minimize $\left\| \overline{\overline{T}} \overline{g} - \overline{T}_d \right\|_W^2$ , subjected to $\begin{array}{l} g(i) \ge 0, \forall i \\ \overline{g}^T \overline{e}_s = \sum_i e_s(i) \end{array}$ [2] Boyd, S., & Vandenberghe, L. (2009).

Convex Optimization. Cambridge University Press. ETSI. (2012). Speech and multimedia Transmission Quality (STQ); Speech quality performance in the presence of background noise; Part 1: Background noise simulation technique and background noise database 202 396-1. ETSI

$W$ is a diagonal weighting matrix, the main diagonal in this example is populated by the frequency band weighting as given by a speech intelligibility index[3]. The optimization utilizes the frequency spreading explicitly in the processes of which frequencies shall be amplified or attenuated with an importance weighting over frequencies.

[3] S3.5-1997, A. (1997). Methods for calculation of the Speech Intelligibility Index. ANSI.

In another non-limiting example, the weighting matrix $W$ may be populated based on the error between the target audio stream 20' provided to the transducer 35 and the corresponding detected internal sound 37 provided by the internal microphone 36 after the internal noise 40' has been removed i.e., the internal noise 40' noise estimated 120 is subtracted from the signal provided by the internal microphone 36. A suitable weighting matrix $W$ may in this case be based on an error in the frequency domain, preferably in the auditory band domain, and even more preferably such that appropriate weight-values are in the range of [0-1] and most preferably normalized to e.g. a root-mean-square value of unity, e.g. using the correlation coefficient between $\overline{e}_{\hat{s}}$ and $\overline{e}_s$ where high correlation, i.e. signals being highly similar, corresponds to a low weight, i.e. no focus on the error at this frequency band, and vice versa..

The optimal gain $\overline{g}_{opt}$ is preferably converted from critical band representation to amplitude over frequency-bin representation $H_g(k)$. Such conversion preferably comprises an interpolation over the employed critical band division e.g., in this example a gammatone filterbank such that $H_g(k) = \sqrt{\sum_b |F_b(k)|^2 g_{opt}(b)}$ .

Observe that $H_g(k)$ is updated once for every new frame $l$ of audio stream 20 and internal noise 40'. Typically, an audio frame is relatively short, a number of samples of the audio frame may be less than an equivalent of 100 ms duration. The human ear, on the other hand, has an integration time of up to 100 - 300 ms. In addition to this, when applying adaptive frequency adjustment, the listener must experience stability in the tonal balance of the audio stream 20, failure to accomplish this may result in discomfort to the user. Another aspect is the frequency variation in the voice optimized signal, i.e. the target audio stream 20'. Adjacent frequency bands must not differ too much in degree of adjustment or an annoying sensation may arise. All of these properties are subjective and, after reading this disclosure, known to the skilled person.

The inventors behind this disclosure have realized that the gain of the voice filter 50 may be processed to order to mitigate the above subjective effects. In one embodiment, the gain of the voice filter 50 is smoothed in frequency by convolution with a frequency window function e.g. a triangular window or similar to assert that isolated frequency-bins do not have either too high amplification or too high attenuation compared to adjacent frequency-bins, i.e. the variation in gain between frequency-bins is limited. In one embodiment the window can be set to a typical value of [0.15,0.7,0.15], i.e. after convolution the resulting gain in each frequency band consist of a 15/15 percent ratio of the adjacent bands and 70 percent ratio of the current band. Typically, it may be unwise to include more than 3-5 critical bands in such convolution operation since each critical band is more independent of adjacent bands the further apart they are in frequency. In another additional or alternative embodiment, the gain of the voice filter 50 is averaged using an exponentially weighted moving average with weighting parameter $T_i$. The weighting parameter $T_i$ may e.g. be selectable by the user or set to a fixed value corresponding to e.g. the integration time of the human ear i.e. -$Ti$ = 0.3. This will effectively also slow down the update rate and therefore allow the user to adjust the hearing to the frequency coloration

As is evident to the skilled person after learning of the method 100 according to the present disclosure, the method 100 is concerned with processing (filtering, changing) the audio stream 20 to increase speech intelligibility of the audio stream 20. The method 100 does not, in its most general form, comprise adding any inverse of the ambient noise 40 or estimated internal noise 40'. The method 100 rather changes (filters, processes) the audio stream 20 by the voice filter 50. The voice filter 50 is a filter adapted to increase speech intelligibility, it is not concerned with removing the ambient noise 40 or the estimated internal noise 40', it is rather concerned with adapting the audio stream 20 to make increase intelligibility of speech comprised in the audio stream 20 when listened to in noisy environments. Filtering the speech audio of the audio stream 20 such that its intelligibility is increased will change the frequency content of the speech audio. In other words, a voice of a person uttering the speech audio may appear foreign or distorted after being subjected to the voice filter, but the intelligibility of the speech is increased.

It should be emphasized that the gain adjustment of the voice filter 50 will be distributed over all frequencies of a source signal bandwidth due to the simultaneous masking and the energy constraint. Hence, at some frequencies, where the noise is masked, the audio source signal may be attenuated and vice versa. This phenomena is illustrated in Fig. 4 showing an example of the audio stream 20 as a solid line, the internal noise 40' as a densely dashed line, the masking threshold $T$ as a dashed line and the target audio stream 20' as a dotted line. The optimization visualized in Fig. 4 is valid for one frame. The target audio stream 20' has been energy redistributed to mask the internal noise 40' at all frequency bands. As can be seen in Fig. 4 when comparing the target audio stream 20' to the audio stream 20, the target audio stream 20' has, by the voice filter 50, been amplified at some frequencies and attenuated at other frequencies in accordance with the teachings herein. It should be noted that if the internal noise 40' is below the masking threshold $T$ for all frequencies, then no voice enhancement is necessary due to background noise.

If applicable, a hearing impairment compensation may be described as, but is not limited to, a filter in either time or frequency domain that counter-act or mitigates the hearing impairments of the user. Hearing impairments may be described by the hearing profile $HL(f_k)$, a frequency function $HL(f_k)$, $f_k$ indicate a set of discrete frequencies, (typically a set of 5-7 frequencies are used) in the unit of Hearing Level dB per frequency, dB HL. The hearing profile $HL(f_k)$ is equal or equivalent to, but is not limited to, an audiogram that is the result of an audiology exam where a tone audiogram was conducted. No impairments corresponds to 0 dB HL and increasing values, i.e. values larger than 0, indicate a hearing impairment or deficiency. The creation of a compensation to mitigate the hearing impairments is described later. In one embodiment, the hearing impairment compensation is defined in the frequency-domain by a frequency function $H_{HI}(k)$, i.e. a filter which is the compensation due to the users hearing profile $HL(f_k)$, and can be applied 105 to the audio stream 20 before the voice optimization. Alternative, it can be included in the voice optimization 130 without prior processing of the audio stream 20. As previously shown, $H_{HI}(k)$ can be grouped into critical band representation and applied as a frequency-bin scaling to $\bar{e}_s$, thereby it will be included in the resulting optimal gain $H_g(k)$. A final frequency amplitude adjustment is given by $H_{HI}(k)H_g(k) = H_{vo}(k)$ of the voice filter 50. This means that the voice enhancement provided by the voice filter 50 due to the ambient noise 40 in low noise conditions may be a unity gain voice filter 50 over all frequencies since the hearing impairment compensation provides sufficient speech intelligibility improvement.

In one embodiment, the user may, via e.g. a mixing setting select the degree $m$ to which the speech compensation to mask the ambient noise 40 shall be applied. For each frequency-bin and -$m$ = [0, ...,1], such that:

$20 * \log_{10}(|H_{vo}(k)|) \, dB = (1 - m) \cdot 20 \log_{10}(|H(k)|) + m * 20 \log_{10}(H_g(k))$, where $m$ = 0 corresponds to no frequency adjustments due to the background noise. Noteworthy is that the phase response is preserved as is, i.e. $\angle H_{vo}(k) = \angle H_{HI}(k)$.

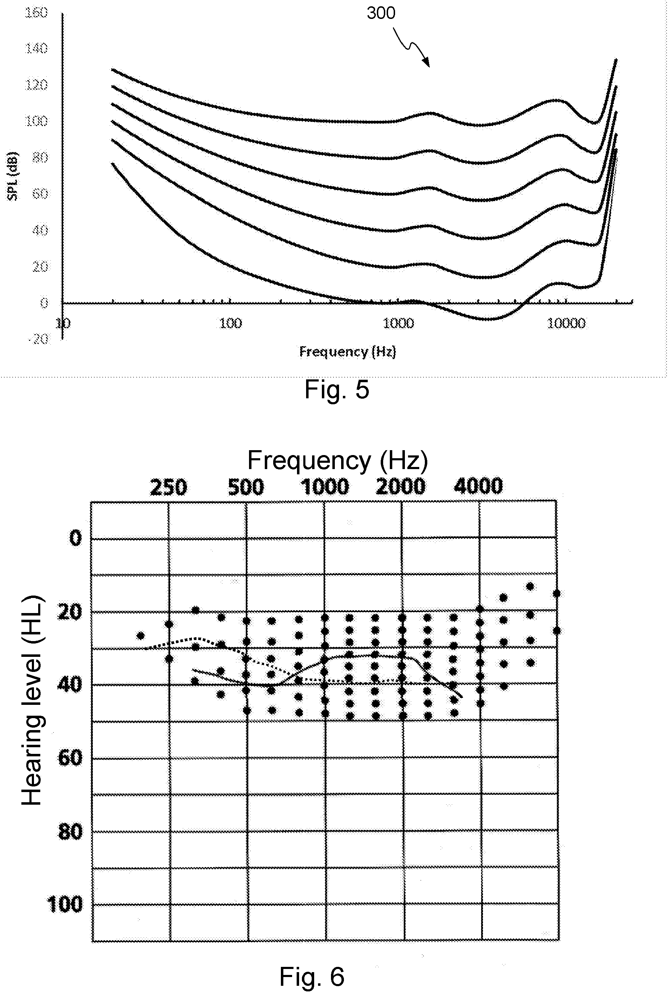

In addition to compensating for the hearing profile $HL(f_k)$ of the user, the present invention may optionally be combined with a volume dependent compensation, VDC. As explained, the audio stream 20 comprises a frequency spectrum, and this frequency spectrum of the audio signal will be perceived differently at different playback sound pressure levels. This can be seen when comparing equal loudness contours 300, see Fig. 5, at different SPL. By compensating for the difference between the different equal loudness contours 300, the audio stream 20 is more likely to be perceived as intended, i.e. as it is perceived when mastered at the master in the cause of pre-recorded data such as podcasts or audio books.

A number of equal loudness contours 300 are shown in Fig. 5. An equal loudness contour 300 is a measure of SPL, typically presented in decibel as dB Sound Pressure Level SPL. The sound pressure level is provided over a frequency spectrum, typically the audible spectrum for humans. Each point in the equal loudness contour 300 represents a sound pressure level for which a listener perceives a constant loudness when compared to a pure tone presented at 1 kHz with a certain phon. A phon is defined in DIN 45631 and ISO 532, and will herein be defined to mean that a 1 kHz tone with a 50 dB SPL has a loudness of 50 phons and all other frequencies perceived with the same loudness as this signal also have a loudness of 50 phons.

In Fig. 5, the equal loudness 300 contours are plotted for six different phons, i.e. there are six plots in the graph of Fig. 5. In Fig. 5, equal loudness contours 300 are presented for 0, 20, 40, 60, 80 and 100 phons. The loudness contours 300 of Fig. 5 are loudness contours 300 according to ISO 226:213. These contours 300 are corrected compared to Fletcher-Munson curves provided by Harvey Fletcher and Wilden A. Munson in 1933. The Fletcher-Munson curves are commonly referred to as the first description of the concept of equal loudness. If the sound pressure level had no effect on how the frequency spectrum of an audio signal was perceived by a listener, the offset between the contours 300 in Fig. 5 would be the same across all frequencies.

Additionally, or alternatively to the hearing profile filtering 105, the method 100 may further comprise determining 136 a playback phons based on a playback volume 15 of the audio stream and/or the detected internal sound 37.

As stated above, if the internal noise 40' is below the masking threshold $T$ for all frequencies, then no voice enhancement is necessary due to background noise. This can be a the result in e.g., low ambient noise environments or if e.g., the hearing impairment compensation have resulting in a signal level where the corresponding threshold $T$ is above the internal ambient noise 40'

In the following embodiment, the hearing impairment is calculated based on the users hearing profile $HL(f_k)$. Utilizing what is known as Speech Intelligibility Index Count-the-dots Audio form[4], a further optimization problem may be formed. Given a hearing profile $HL(f_k)$, it is desired to provide a filter $H_{HI}(k)$ to adjust the hearing threshold to maximize a standardized Articulation Index, AI, or Speech Intelligibility Index, SII, as given by the count-the-dot audiogram. The AI is calculated as the number of dots below the hearing profile $HL(f_k)$ when the hearing profile $HL(f_k)$ is plotted on the defined diagram, this is illustrated by the dashed line in Fig 6.

[4] https://www.audiologyonline.com/articles/20q-aided-speech-intelligibility-index-23707

In one embodiment, that can be described as an optimization formulation where a set of gains $h_{HI}(k)$ as function of frequency-bins are optimized to amplify/attenuation and to redistribute the energy of the audio stream such that the intelligibility index is maximized,

$$\max_{h_{HI}(k)} AI\big(h_{HI}(k)\big)$$

$$AI\big(h_{HI}(k)\big) = \sum_{k'} D_{k'} \,, k' \in \{k' \,|\, 1 \leq k' \leq 100, D_{k'} \leq HL(f_k)/h_{HI}(k)\}$$

$$\sum_k |h_{HI}(k)|^2 = \gamma$$

The filter $H_{HI}(k) = h_{HI}(k)$ is consequently created from the necessary gains at frequencies k, such that the total energy change in the target audio stream 20' by the resulting filter is equal to gamma. In one embodiment $\gamma$=1 corresponds to an energy redistribution as exemplified in Fig 6, another example is $\gamma$=2 were a constant gain of 2 over all frequencies are obtained. Gamma may be set depending on the amplification possibilities in the system 1, typically it is set to 1 (unity) as exemplified above if no amplification is allowed or 2 if a doubling is possible. Again, same reasoning applies here as to the energy distribution due to background noise, it is not possible to amplify over all frequencies.

Fig. 6 depicts an exemplary count-the-dot audiogram wherein the dotted line is hearing test result in unit dB HL (hearing level). The solid line is the result after the compensation filter has been applied. As seen, the AI has increased, i.e. there are more dots are below the solid line than the dotted line. As it is desirable to have the overall energy change provided by the filter $H_{HI}(k)$ to be unity, some dots are lost. The results shown in Fig. 6 are valid for a sound pressure of 60 dB, i.e. normal conversational level or listening level in quite environments. Since an approximate sound pressure level of the target audio stream 20' when played by the transducer 35 is available e.g. by pre-calibration of volume steps of the system 1 and corresponding sound pressure levels, by measurement of the sound pressure levels using the internal microphone 36, it is possible to adjust the e.g. the hearing profile accordingly.

The VDC is, as mentioned above, in one optional embodiment implemented using a pre-calibrated table making it a stationary method which does not change the filter $H_{HI}(k)$ based on the dynamics of the audio stream 20. Consequently, the filter $H_{HI}(k)$ is only updated if the volume setting, i.e. the playback volume 15 of the audio device 30, is changed. In one embodiment the pre-calibrated table contains scaling factors $a(k)$ for each volume step and frequency-bin that are applied to $H_{HI}(k)$ e.g, $a(k)H_{HI}(k)$. The size of the pre-calibrated table depend on the number of volume step and the number of frequency-bins used in the calculations.

In one embodiment the VDC compute two hearing compensations in the frequency domain, one for each ear. In one additional embodiment, it may be configured to combine the left ear compensation and the right ear compensation in order to provide a single hearing compensation suitable for both ears. This is important when playback utilize several transducers and the sound from each transducer can physically reach each ear of the listener.

In another embodiment of an implementation of the VDC, that may very well be combined with the embodiment above, the feedback microphone signal is used making it a dynamic method that updates the filter $H_{HI}(k)$ based on the levels of the target audio stream 20' as it is played by the transducer 35. This approach calculates the compensation more often. In order to avoid sharp transients in the audio signal, the update rate of the filter $H_{HI}(k)$ may be kept low, about 0,25-1 Hz.

Although count-the-dot audiogram is provided with the assumption that the signal or speech level is 60 dB SPL, the result and method 100 herein may very well with correct result be scaled with the sound pressure level. As a non-limiting example, a 10 dB increase in volume, corresponding to 10 dB SPL, would correspond to the dotted line of Fig. 6 being offset 10 dB towards 0dB HL on the hearing level scale, the y-axis. This means that, due to the increased volume, the speech intelligibility increases and the corresponding hearing impairment compensation is adjusted accordingly. A lower volume has an analogue example. As the skilled person would have deduces, if the dotted line is above the area with the dots including any offsets due to increase signal level, no enhancement is necessary.

Other methods of scaling the results and adjusting the hearing impairments based on the count-the-dots audiogram and the teachings here should now be apparent for a person skilled in the art.

As previously mentioned, the inventors behind this disclosure have realised that the internal noise 40' may be accurately modelled based on the ambient noise 40 by means of Machine Learning. The internal noise 40' is known from ANC technology to be the external noise 40 filtered by the primary (acoustic) path. Wherein the latter describe the impact on the external noise 40 when propagating from exterior to the headphones 30 into the ear cavity. The primary path is the important (unknown) noise transfer function that must be found in real-time and at high-degree of accuracy for the ANC to operate correctly i.e., for the ANC technology to form the correct anti-noise that cancels (at therefore attenuate) the internal noise 40'. The real-time and accuracy requirements on ANC technology typically dictated that ANC technology is executed in dedicated hardware.

For the present invention, the real-time and accuracy requirements when estimating the internal noise 40' is much lower compared to ANC technology, as will be described later. Further to this, no dedicated hardware is necessary. Many of the same aspects, known to a person skilled in the art, still exist e.g. the estimation of internal noise 40' must exclude echo from near-end audio stream when rendered by transducers 35, and instead of complex real-time adaptive filtering and calibrations (as for ANC), a neural network is used to model the primary path including the separation between noise, echo and near-end talker.

The neural network is a RNN. RNNs are typically based on Long Short Term Memory, LSTM, or Gated Recurring Units, GRU. In general, a feature vector and a output vector of the RNN may be selected in numerous ways and the selection of the two, the size of the RNN along with the training data quality and the training of RNN will determine the performance of the RNNs ability to output the desired output data given the input, i.e. feature data.

The size of the RNN is set by the training result and the resource constraints posed by the implementation into a real-time audio system. Generally, the size i.e. the number of units and the number of hidden layers of the RNN is a design selection as is the choice of the number of points in an FFT calculation. A typical size of the RNN is e.g. 200-300 units with 3-4 hidden layers. The computational demand of the RNN can be decreased e.g. by selecting a lower order RNN and increasing the error on the output and/or by skipping and structured pruning of RNN units.

It should be noted that the absolute level of the signal provided by the external microphone 5 is important for the application. Hence, an approach for data augmentation may be adopted in which each training example is pre-filtered with a randomized generated second-order filter. Thereby training the RNN to be robust against frequency variations due to an external microphone 5 frequency response tolerance and an external microphone 5 placement variation. Levels of the individual signal in training examples are preferably varied for robustness against level variations.

It is apparent that the above RNN description is but one non-limiting example provided as one working example of the RNN. A person skilled in the art can surely, after digesting the teachings herein, device a different example, varying the feature set, the output set and/or the training e.g. data set, loss function, optimization process etc..

Feature extraction for the RNN may be provided by speech recognition theory. And the following embodiments are to be considered as non-exhaustive examples of feature extractions that are possible to combine with one another in any order or set imaginable.

In one embodiment, the features comprise a discrete cosines transform of the logarithm of the energy per critical band of the signal provided by the microphone 5. In one embodiment, the features comprise the spectrum of the signal provided by the microphone 5, represented in critical bands as described in the present disclosure. In a further embodiment, the features further comprise an average energy in the entire sub-frame. In one embodiment, the features comprise a delta change in amplitude between current sub-frame and previous sub-frame cepstral logarithmic coefficients covering up to at least 600 Hz, preferably up to at least 1000 Hz. Thereby including, with high certainty, the vocal fundamentals of typical voices. In one embodiment, the features comprise a binary signal stating if a non-noise source signal is active or not e.g. a simple level detector to state if user is talking or echo from transducer is present..

The outputs of the RNN typically comprise the average energy values $E_v(b)$, $b = 1 \ldots N_B$ of the internal noise 40' for each auditory filter band. In one embodiment the outputs of the RNN also comprise, in addition to the above, a binary signal indicating noise or not-noise, a second binary signal indicating low or high level, a third binary signal indicating that a near-end signal is active. Additional signals like the binary signals described might not be directly used in the algorithm to calculate the optimal voice filter 50, but for a person skilled in the art it is easily recognized that relevant outputs such as the described can help to obtain a better result when training the RNN.

In training the RNN, one important aspect is the generalization capabilities of the RNN, such that it will operate correctly even in conditions not used during the training. Therefore, raining examples are preferably made up by a combination of background noise e.g. full-size car 100 km/h and Cafeteria[5], echo signal and near-end talk with varying levels and filtrations as stated above. Echo signal and near-end talk signal are preferably independent i.e., the same utterances do not exist simultaneously.

[5] ETSI. (2012). Speech and multimedia Transmission Quality (STQ); Speech quality performance in the presence of background noise; Part 1: Background noise simulation technique and background noise database 202 396-1. ETSI.

In one embodiment, the ground truth of the training is constituted by the noise (only) power per auditory filter based on the spectrum of the noise signal (only), divided into auditory filters, and referenced (measured) in the headphone-and-ear cavity. This will therefore include the primary path i.e., the outside the headphone to inside the headphone-and-ear cavity. This is important since the headphones have at least a highfrequency attenuation on the noise due to the acoustic seal when worn (depending on the headphone type, in-ear, over-ear and on-ear). If the headphones also have Active Noise Cancellation (typically operative in the frequency range of 150 - 900 Hz), the noise outside the headphones are much different from the noise inside the cavity.

A system that can facilitate the presentation of noise, near-end speech and echo and at the same time record the internal noise 40' (ground truth) is industry standard and the process is fully automated. In one non-limiting example, a scenario is started where background noise is rendered from a multi-speaker setup in an measurement chamber, the headphones under test is situated on the head-and-torso simulator that records the internal noise as the signal that reaches the microphone placed in each ear-simulator. Simultaneously, the background noise is recorded by the external microphone 5 on the headphones 30. After the scenario is completed, each signal is conditioned, time adjusted and converted into either a feature set or a ground truth set.

In summary the usage of machine learning and recurrent neural networks in the modelling of the internal noise 40' result in a noise estimation in an auditory band model, the removal of near end talk and echo without using complex Voice Activity Detection or Echo cancellation and it will model a primary path from outside the headphone to inside the headphone-and-ear cavity.

Several detailed implementation of the different aspects of the voice filter 50 are presented throughout this disclosure. Regardless of how the voice filter 50 is determined, the voice filter 50, described above as $H_{vo}(k)$, is applied 140 to the digital source signal, the audio stream 20. There may be a multitude of voice filters 50, each voice filter 50 provides a target audio stream 20' to be rendered on a transducer 35. There are several approaches to process the audio stream 20 and the person skilled in the art will see, after reading this disclosure, several others then the following two examples. The voice filter 50 may, in one embodiment, be applied 140 by e.g. conversion of frequency function to finite impulse response filter if the phase response is less important, it can be a symmetric impulse response filter resulting in linear phase. The voice filter 50 may, in one embodiment, be applied 140 by multiplication in the frequency domain by an overlap-and-add method to avoid circular convolution when multiplying to frequency functions.

In one preferred embodiment, the audio device 30 comprises at least one voice filter 50 per transducer 35.

In one embodiment, the voice filter 50 providing the target audio stream 20' is energy normalized. This may lead to high peak amplitudes in the time domain signal. In a further embodiment, the target audio stream 20' is attenuated to ensure that the signal amplitude of the target audio stream 20' is not too high for the final signal format. The signal amplitude may then be then transformed into the correct format without distortion using e.g. a standard Limiter or Dynamic Range Controller, DRC. It should be noted that no additional processing apart from controlling the signal amplitude is required. The limiter and DRC can be other components of the digital audio system and are preferably included for the sake of hearing safety.

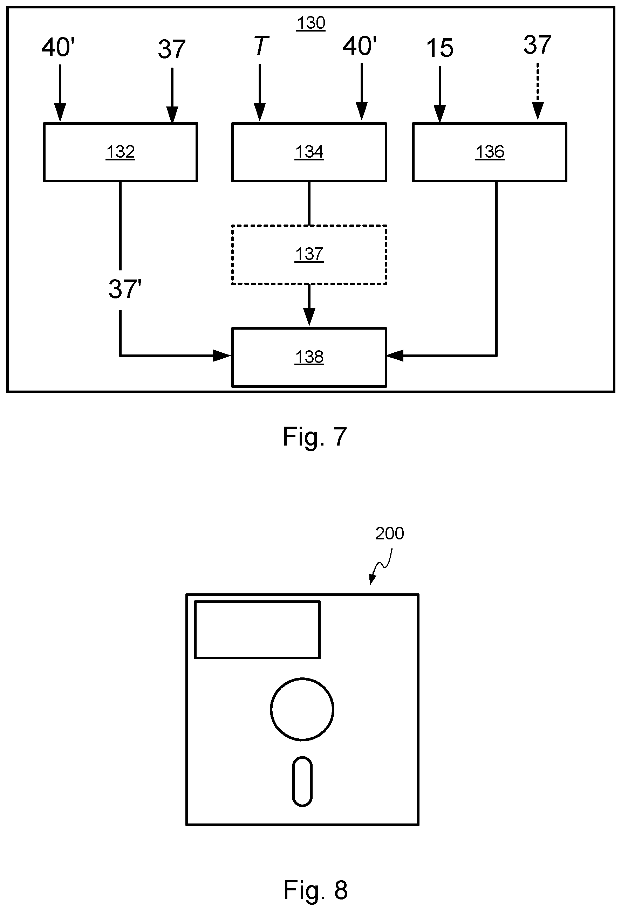

With reference to Fig. 7, some further non-exhaustive steps of determining 130 the voice filter 50 will be explained. The following embodiments are possible to combine with any of the other embodiments presented herein and are fully compatible with the detailed examples and calculations disclosed herein.

In one embodiment of the method 100, the step of determining 130 the voice filter 50 comprises subtracting 132 the estimated internal noise 40' from the detected internal sound 37. This will provide a true audio stream 37' that is what the target audio stream 20' actually sounds like at the ear of the user. Based on a difference between the target audio stream 20' and the true audio stream 37', it is consequently possible to update 138 the voice filter 50 based on this difference. This effectively creates a control loop where it is possible to ensure that the target audio stream 37 is actually what the user hears. This is beneficial as it enables the voice filter may be updated based on e.g. how the audio device is worn by a user and how well the audio device fits at the ear of the user.

In one embodiment of the method 100, the step of determining 130 the voice filter 50 comprises comparing 134 the estimated internal noise 40' and one or more masking thresholds *T*. This is substantially comparing 134 the densely dashed line, the estimated internal noise 40', to the dashed line, the masking threshold *T*, of Fig. 4. The voice filter is then updated based on the comparing 134 to provide the target audio stream 20'. In a further optional embodiment, the method 100 the masking thresholds *T* are calculated by performing a critical band analysis 137 of the audio stream 20. The critical band analysis 137 comprises auditory masking by frequency spreading.

In one embodiment of the method 100, it is configured to compensate for the playback volume 15 of the audio device 30 such as described in reference to Fig. 5. This comprises, in the step of determining 130 the voice filter 50, determining 136 a playback phon based on the playback volume 15. The playback phon may be determined from the playback phon by means of a transfer function describing a transfer function of the sound through the transducer 35. Further to this, the step of updating 138 the voice filter 50 is further based on an equal loudness contour associated with the determined phon. In a further embodiment, the playback phon is further based on the detected 160 internal sound 37.

The present invention will, in addition to solving the previously presented problem, provide increased speech intelligibility substantially regardless of how a user of the audio device 30 chooses to carry the audio device 30. Typically, the transducers 35 of an audio device are configured to work at a certain load. This load is in the form of the air cavity between the user and the transducer 35. If the audio device 30 is e.g. a pair of closed headphones, the air cavity is formed by the headphones 30 being carried firmly and tightly about the outer ear of the user. However, as not all ears are the same, and not all users carry their audio devices 30 in the same way, the load of the transducer 35 will differ between users and the thereby the sound of the audio device 30. The present invention solves also this problem by detecting 160 the internal sound 37 which will differ depending on how the audio device 30 is worn.

## Claims

1. A method (100) of increasing speech intelligibility of an audio stream (20) comprising speech audio performed in real-time by headphones (30), the method (100) comprising:

   detecting (110) an ambient noise (40),
   estimating (120), by one or more Recurring Neural Networks, RNN, an internal noise (40') based on the ambient noise (40), wherein the estimated internal noise (40') is an estimation of noise as perceived at an eardrum of a user of the headphones (30),
   determining (130) a voice filter (50) based on the estimated internal noise (40') and the audio stream (20), wherein the voice filter (50) is based on psychoacoustic masking, and a frequency gain of the voice filter (50) is calculated such that the internal noise (40') is masked by a target audio stream (20') that will result from applying the voice filter (50) to the audio stream (20),
   applying (140) the voice filter (50) to the audio stream (20) to provide the target audio stream (20'),
   outputting (150) the target audio stream (20') to one or more transducers (35) thereby generating an internal sound (37) directed to an ear cavity of the user of the headphones (30), and
   detecting (160) the internal sound (37) of the headphones (30), by one or more internal microphones (36) arranged to detect the internal sound (37) at the ear cavity of the user of the headphones (30),
   wherein determining (130) the voice filter (50) is further based on the detected internal sound (37) and comprises:

   subtracting (132) the estimated internal noise (40') from the detected internal sound (37) to provide a true audio stream (37'), and
   updating (138) the voice filter (50) based on a difference between the target audio stream (20') and the true audio stream (37').

2. The method (100) of claim 1, wherein determining (130) the voice filter (50) further comprises:

   comparing (134) the estimated internal noise (40') to one or more masking thresholds (*T*), and
   updating (138) the voice filter (50) based the comparing (134);
   preferably, said one or more masking thresholds (*T*) are calculated by performing a critical band analysis (137) of the audio stream (20), wherein the critical band analysis (137) comprises auditory masking by frequency spreading.

3. The method (100) of any of the preceding claims, further comprising filtering (105) the audio-stream (20) to compensate for a hearing profile ($HL(f_k)$) associated with a user of the headphones (30); wherein preferably, determining (130) the voice filter (50) is performed after the filtering (105), such that the determining (130) is based on an audio stream (20) compensated for a hearing profile ($HL(f_k)$) associated with the user of the headphones (30).

4. The method (100) of any of the preceding claims, wherein determining (130) the voice filter (50) further comprises:

   determining (136) a playback phon based on a playback volume (15), and
   wherein the step of updating (138) the voice filter (50) is further based on an equal loudness contour associated with the determined phon;
   preferably, the determining (136) of the playback phon is further based on the internal sound (37).

5. The method (100) of any of the preceding claims, wherein determining the voice filter (50) further comprises smoothing a gain of the voice filter (50) in frequency by convolution using a frequency window function.

6. The method (100) of any of the preceding claims, wherein determining the voice filter (50) further comprises averaging the gain of the voice filter (50) using an exponentially weighted moving average comprising one or more weighting parameters ($T_i$).

7. The method of any of the preceding claims, wherein determining (130) the voice filter (50) further comprises applying configurable mixing setting to select the degree ($m$) at which the voice filter (50) is to be applied to the audio stream (20).

8. The method (100) of any of the preceding claims, wherein the ambient noise (40) is detected by an external microphone (5) operatively connected to the headphones (30), and/or wherein the ambient noise (40) is limited to a maximum audio bandwidth of up to 10 kHz, preferably up to 8 kHz.

9. The method (100) of any of the preceding claims, further comprising, applying Active Noise Cancellation, ANC, to the audio stream (20) after applying (140) the voice filter (50) to the audio stream (20).

10. Headphones (30) comprising one or more transducers (35), at least one internal microphone (36) arranged to detect an internal sound (37) at an ear cavity of a user, and a processing module (32) operatively connected to the internal microphone (36), to said one or more transducers (35) and to an external microphone (5), wherein the processing module (32) is configured to perform the method (100) of any one of the claims 1 to 9.

11. The headphones (30) of claim 10, wherein the external microphone (5) is comprised in the headphones (30).

12. An audio system (1) for increasing speech intelligibility in real-time, the system (1) comprising a portable electronic device (10) operatively connected to headphones (30) and configured to transfer an audio stream (20) comprising speech audio to the headphones (30), wherein the headphones are the headphones of any of claims 10 or 11.

13. The audio system (1) of claim 12 wherein an ambient noise (40) is sensed by an external microphone (5) comprised in the electronic device (10), and the electronic device (10) is further configured to transfer the ambient noise (40) sensed by the external microphone (5) to the headphones (30).

14. A computer program product (200) configured to, when executed by a processing module (32), causes the processing module (32) to perform the method (100) of any of the claims 1 to 9.

**Patentansprüche**

1. Verfahren (100) zur Erhöhung der Sprachverständlichkeit eines Audiostreams (20), der Sprachaudio umfasst, der in Echtzeit über Kopfhörer (30) wiedergegeben wird, wobei das Verfahren (100) Folgendes umfasst:

   Erkennen (110) eines Umgebungsgeräusches (40),
   Schätzen (120), mittels eines oder mehrerer rekurrenter neuronaler Netze (RNN), eines internen Geräusches (40') auf Basis des Umgebungsgeräusches (40), wobei das geschätzte interne Geräusch (40') eine Schätzung des am Trommelfell eines Nutzers der Kopfhörer (30) wahrgenommenen Geräusches darstellt,
   Bestimmen (130) eines Sprachfilters (50) auf Basis des geschätzten internen Geräusches (40') und des Audiostreams (20), wobei der Sprachfilter (50) auf psychoakustischer Maskierung basiert und eine Frequenzverstärkung des Sprachfilters (50) so berechnet wird, dass das interne Geräusch (40') durch einen Ziel-Audiostream (20') maskiert wird, der aus der Anwendung des Sprachfilters (50) auf den Audiostream (20) resultiert,

Anwenden (140) des Sprachfilters (50) auf den Audiostream (20), um den Ziel-Audiostream (20') bereitzustellen,
Ausgeben (150) des Ziel-Audiostreams (20') an einen oder mehrere Wandler (35), wodurch ein interner Schall (37) erzeugt wird, der in Richtung einer Ohrhöhle des Nutzers der Kopfhörer (30) gerichtet ist, und
Erkennen (160) des internen Schalls (37) der Kopfhörer (30) mittels eines oder mehrerer interner Mikrofone (36), die so angeordnet sind, dass sie den internen Schall (37) in der Ohrhöhle des Nutzers der Kopfhörer (30) erfassen,
wobei das Bestimmen (130) des Sprachfilters (50) ferner auf dem erkannten internen Schall (37) basiert und Folgendes umfasst:

Subtrahieren (132) des geschätzten internen Geräusches (40') vom erkannten internen Schall (37), um einen wahren Audiostream (37') bereitzustellen, und
Aktualisieren (138) des Sprachfilters (50) auf Basis einer Differenz zwischen dem Ziel-Audiostream (20') und dem wahren Audiostream (37').

2. Verfahren (100) nach Anspruch 1, wobei das Bestimmen (130) des Sprachfilters (50) ferner Folgendes umfasst:

Vergleichen (134) des geschätzten internen Geräusches (40') mit einer oder mehreren Maskierungsschwellen (1), und
Aktualisieren (138) des Sprachfilters (50) auf Basis des Vergleichens (134);
bevorzugt werden die eine oder mehreren Maskierungsschwellen (1) durch Durchführung einer kritischen Bandanalyse (137) des Audiostreams (20) berechnet, wobei die kritische Bandanalyse (137) eine auditive Maskierung durch Frequenzausbreitung umfasst.

3. Verfahren (100) nach einem der vorhergehenden Ansprüche, ferner umfassend das Filtern (105) des Audiostreams (20) zur Kompensation eines Hörprofils (HL(fi)), das einem Nutzer der Kopfhörer (30) zugeordnet ist; wobei bevorzugt das Bestimmen (130) des Sprachfilters (50) nach dem Filtern (105) durchgeführt wird, sodass das Bestimmen (130) auf einem Audiostream (20) basiert, der für ein dem Nutzer der Kopfhörer (30) zugeordnetes Hörprofil (HL(fi)) kompensiert ist.

4. Verfahren (100) nach einem der vorhergehenden Ansprüche, wobei das Bestimmen (130) des Sprachfilters (50) ferner Folgendes umfasst:

Bestimmen (136) eines Wiedergabe-Phons auf Basis einer Wiedergabelautstärke (15), und wobei der Schritt des Aktualisierens (138) des Sprachfilters (50) ferner auf einer dem bestimmten Phon zugeordneten Gleichlautheitskurve basiert;
bevorzugt basiert das Bestimmen (136) des Wiedergabe-Phons ferner auf dem internen Schall (37).

5. Verfahren (100) nach einem der vorhergehenden Ansprüche, wobei das Bestimmen des Sprachfilters (50) ferner das Glätten einer Verstärkung des Sprachfilters (50) im Frequenzbereich durch Faltung unter Verwendung einer Frequenzfensterfunktion umfasst.

6. Verfahren (100) nach einem der vorhergehenden Ansprüche, wobei das Bestimmen des Sprachfilters (50) ferner das Mitteln der Verstärkung des Sprachfilters (50) unter Verwendung eines exponentiell gewichteten gleitenden Mittelwerts umfasst, der einen oder mehrere Gewichtungsparameter (Ti) enthält.

7. Verfahren nach einem der vorhergehenden Ansprüche, wobei das Bestimmen (130) des Sprachfilters (50) ferner das Anwenden einer konfigurierbaren Mischungseinstellung umfasst, um den Grad (m) auszuwählen, mit dem der Sprachfilter (50) auf den Audiostream (20) angewendet werden soll.

8. Verfahren (100) nach einem der vorhergehenden Ansprüche, wobei das Umgebungsgeräusch (40) durch ein externes Mikrofon (5) erfasst wird, das operativ mit den Kopfhörern (30) verbunden ist, und/oder wobei das Umgebungsgeräusch (40) auf eine maximale Audiobandbreite von bis zu 10 kHz, bevorzugt bis zu 8 kHz, begrenzt ist.

9. Verfahren (100) nach einem der vorhergehenden Ansprüche, ferner umfassend das Anwenden einer aktiven Geräuschunterdrückung (ANC) auf den Audiostream (20) nach dem Anwenden (140) des Sprachfilters (50) auf den Audiostream (20).

10. Kopfhörer (30), umfassend einen oder mehrere Wandler (35), mindestens ein internes Mikrofon (36), das so angeordnet ist, dass es einen internen Schall (37) in einer Ohrhöhle eines Nutzers erfasst, sowie ein Verarbeitungsmodul (32), das operativ mit dem internen Mikrofon (36), mit den einen oder mehreren Wandlern (35) und mit einem externen Mikrofon (5) verbunden ist, wobei das Verarbeitungsmodul (32) dazu konfiguriert ist, das Verfahren (100) nach einem der Ansprüche 1 bis 9 durchzuführen.

11. Kopfhörer (30) nach Anspruch 10, wobei das externe Mikrofon (5) in den Kopfhörern (30) enthalten ist.

12. Audiosystem (1) zur Erhöhung der Sprachverständlichkeit in Echtzeit, wobei das System (1) ein tragbares elektronisches Gerät (10) umfasst, das operativ mit Kopfhörern (30) verbunden ist und dazu konfiguriert ist, einen Audiostream (20), der Sprachaudio umfasst, an die Kopfhörer (30) zu übertragen, wobei die Kopfhörer die Kopfhörer nach einem der Ansprüche 10 oder 11 sind.

13. Audiosystem (1) nach Anspruch 12, wobei ein Umgebungsgeräusch (40) durch ein externes Mikrofon (5) erfasst wird, das in dem elektronischen Gerät (10) enthalten ist, und wobei das elektronische Gerät (10) ferner dazu konfiguriert ist, das durch das externe Mikrofon (5) erfasste Umgebungsgeräusch (40) an die Kopfhörer (30) zu übertragen.

14. Computerprogrammprodukt (200), das dazu konfiguriert ist, bei Ausführung durch ein Verarbeitungsmodul (32) das Verarbeitungsmodul (32) zu veranlassen, das Verfahren (100) nach einem der Ansprüche 1 bis 9 auszuführen.

## Revendications

1. Procédé (100) d'augmentation de l'intelligibilité de la parole d'un flux audio (20) comprenant de l'audio vocal réalisé en temps réel par des écouteurs (30), le procédé (100) comprenant :

   la détection (110) d'un bruit ambiant (40),
   l'estimation (120), par un ou plusieurs réseaux neuronaux récurrents, RNN, d'un bruit interne (40') sur la base du bruit ambiant (40), dans lequel le bruit interne (40') estimé est une estimation du bruit tel que perçu au niveau d'un tympan d'un utilisateur des écouteurs (30),
   la détermination (130) d'un filtre vocal (50) sur la base du bruit interne (40') estimé et du flux audio (20), dans lequel le filtre vocal (50) est basé sur un masquage psychoacoustique, et un gain de fréquence du filtre vocal (50) est calculé de manière à ce que le bruit interne (40') soit masqué par un flux audio cible (20') qui découlera de l'application du filtre vocal (50) au flux audio (20),
   l'application (140) du filtre vocal (50) au flux audio (20) pour fournir le flux audio cible (20'),
   la délivrance (150) du flux audio cible (20') à un ou plusieurs transducteurs (35) générant ainsi un son interne (37) dirigé vers une cavité auriculaire de l'utilisateur des écouteurs (30), et
   la détection (160) du son interne (37) des écouteurs (30), par un ou plusieurs microphones internes (36) agencés pour détecter le son interne (37) au niveau de la cavité auriculaire de l'utilisateur des écouteurs (30),
   dans lequel la détermination (130) du filtre vocal (50) est en outre basée sur le son interne (37) détecté et comprend :

      la soustraction (132) du bruit interne estimé (40') du son interne (37) détecté pour fournir un flux audio réel (37'), et
      la mise à jour (138) du filtre vocal (50) sur la base d'une différence entre le flux audio cible (20') et le flux audio réel (37').

2. Procédé (100) selon la revendication 1, dans lequel la détermination (130) du filtre vocal (50) comprend en outre :

   la comparaison (134) du bruit interne (40') estimé à un ou plusieurs seuils de masquage (T), et
   la mise à jour (138) du filtre vocal (50) sur la base de la comparaison (134) ;
   de préférence, ledit ou lesdits seuils de masquage (T) sont calculés par la réalisation d'une analyse de bande critique (137) du flux audio (20), dans lequel l'analyse de bande critique (137) comprend un masquage auditif par étalement de fréquence.

3. Procédé (100) selon l'une quelconque des revendications précédentes, comprenant en outre le filtrage (105) du flux audio (20) pour compenser un profil d'audition ($HL(f_k)$) associé à un utilisateur des écouteurs (30) ; dans lequel, de préférence, la détermination (130) du filtre vocal (50) est réalisée après le filtrage (105), de sorte que la détermination (130) soit basée sur un flux audio (20) compensé pour un profil d'audition ($HL(f_k)$) associé à l'utilisateur des écouteurs (30).

4. Procédé (100) selon l'une quelconque des revendications précédentes, dans lequel la détermination (130) du filtre vocal (50) comprend en outre :

   la détermination (136) d'un phone de lecture sur la base d'un volume de lecture (15), et
   dans lequel l'étape de mise à jour (138) du filtre vocal (50) est en outre basée sur un contour d'intensité sonore égale associé au phone déterminé ;
   de préférence, la détermination (136) du phone de lecture est en outre basée sur le son interne (37).

5. Procédé (100) selon l'une quelconque des revendications précédentes, dans lequel la détermination du filtre vocal (50) comprend en outre le lissage d'un gain du filtre vocal (50) en fréquence par convolution à l'aide d'une fonction de fenêtre de fréquence.

6. Procédé (100) selon l'une quelconque des revendications précédentes, dans lequel la détermination du filtre vocal (50) comprend en outre le calcul de la moyenne du gain du filtre vocal (50) à l'aide d'une moyenne mobile exponentiellement pondérée comprenant un ou plusieurs paramètres de pondération ($T_i$).

7. Procédé selon l'une quelconque des revendications précédentes, dans lequel la détermination (130) du filtre vocal (50) comprend en outre l'application d'un réglage de mélange configurable pour sélectionner le degré ($m$) auquel le filtre vocal (50) doit être appliqué au flux audio (20).

8. Procédé (100) selon l'une quelconque des revendications précédentes, dans lequel le bruit ambiant (40) est détecté par un microphone externe (5) relié de manière opérationnelle aux écouteurs (30), et/ou dans lequel le bruit ambiant (40) est limité à une bande passante audio maximale allant jusqu'à 10 kHz, de préférence jusqu'à 8 kHz.

9. Procédé (100) selon l'une quelconque des revendications précédentes, comprenant en outre l'application de l'annulation active du bruit, ANC, au flux audio (20) après l'application (140) du filtre vocal (50) au flux audio (20).

10. Écouteurs (30) comprenant un ou plusieurs transducteurs (35), au moins un microphone interne (36) agencé pour détecter un son interne (37) au niveau d'une cavité auriculaire d'un utilisateur, et un module de traitement (32) relié de manière opérationnelle au microphone interne (36), audit ou auxdits transducteurs (35) et à un microphone externe (5), dans lesquels le module de traitement (32) est configuré pour réaliser le procédé (100) selon l'une quelconque des revendications 1 à 9.

11. Écouteurs (30) selon la revendication 10, dans lesquels le microphone externe (5) est compris dans les écouteurs (30).

12. Système audio (1) destiné à augmenter l'intelligibilité de la parole en temps réel, le système (1) comprenant un dispositif électronique portable (10) relié de manière opérationnelle à des écouteurs (30) et configuré pour transférer un flux audio (20) comprenant de l'audio vocal vers les écouteurs (30), dans lequel les écouteurs sont les écouteurs selon l'une quelconque des revendications 10 et 11.

13. Système audio (1) selon la revendication 12, dans lequel un bruit ambiant (40) est détecté par un microphone externe (5) compris dans le dispositif électronique (10), et le dispositif électronique (10) est en outre configuré pour transférer le bruit ambiant (40) détecté par le microphone externe (5) vers les écouteurs (30).

14. Produit programme informatique (200) configuré pour, lorsqu'il est exécuté par un module de traitement (32), amener le module de traitement (32) à réaliser le procédé (100) selon l'une quelconque des revendications 1 à 9.

Fig. 1a

Fig. 1b

Fig. 2

100

103    105

110    120

130    140

150    160

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ETSI. (2012). Speech and multimedia Transmission Quality (STQ). **BOYD, S.** ; **VANDENBERGHE, L.** Convex Optimization.. Cambridge University Press., 2009